# EUROPÄISCHE PATENTSCHRIFT

(11) **EP 3 739 408 B1**
(45) Veröffentlichungstag und Bekanntmachung des Hinweises auf die Patenterteilung: **17.01.2024**
(21) Anmeldenummer: 19174181.8
(22) Anmeldetag: 13.05.2019
(51) Int. Cl.: G05B 19/418

(54) **VERFAHREN ZUR KONFIGURATIONSÄNDERUNG IN EINEM CYBER-PHYSISCHEN SYSTEM**
METHOD FOR CHANGING CONFIGURATION IN A CYBER-PHYSICAL SYSTEM
PROCÉDÉ DE CHANGEMENT DE CONFIGURATION DANS UN SYSTÈME CYBERPHYSIQUE

(43) Veröffentlichungstag der Anmeldung: 18.11.2020
(73) Patentinhaber: Siemens Aktiengesellschaft, 80333 München (DE)
(72) Erfinder: Gawron-Deutsch, Tobias, 1040 Wien (AT); Kintzler, Florian, 1140 Wien (AT)
(74) Vertreter: Siemens Patent Attorneys

(56) Entgegenhaltungen:
- EP-A1- 3 211 830
- EP-A1- 3 404 500
- WO-A2-2005/093530

## Beschreibung

### Technisches Gebiet

Die vorliegende Erfindung betrifft ein Verfahren zur Konfigurationsänderung in einem so genannten cyber-physischen System, welches zumindest ein physisches System und ein Kommunikationsnetz umfasst, über welches Daten zwischen den Einheiten des physischen Systems bzw. diesen zugeordneten Feldeinheiten ausgetauscht werden. Dabei weist das Kommunikationsnetz eine von einer Topologie des physischen Systems unabhängige Kommunikationstopologie auf. Auf den Feldeinheiten sind entsprechend ihrer jeweiligen Funktionalität Funktionsmodule hinterlegt bzw. installiert, wobei von den Feldeinheiten entsprechend der jeweiligen Funktionalität die Kommunikationstopologie des Kommunikationsnetzes für einen Datenaustausch genutzt wird.

### Stand der Technik

Heutzutage werden in vielen Bereichen wie z.B. im Energiebereich, in der Wasserversorgung, in der Gebäudetechnik, im Fertigungs- und Automatisierungsbereich, insbesondere bei modernen Produktionsanlagen der so genannten Industrie 4.0, etc. so genannte cyber-physische Systeme bzw. cyber-physical Systems (CPS) eingesetzt. Cyber-physische Systeme bezeichnen dabei üblicherweise eine Kopplung von Einheiten eines physischen Systems wie z.B. eines Energieversorgungsnetzes, einer Wasserversorgungssystems, eines Gebäudes oder Gebäudekomplexes, einer Fertigungs- oder Produktionsanlage, etc. mit einer Datenverarbeitungsinfrastruktur bzw. einem Kommunikationsnetz (z.B. Access Points, Router, Switches, drahtgebundene und/oder drahtlose Kommunikationsverbindungen), über welches das physische System überwacht, geregelt und gesteuert wird. Das Funktionsprinzip des cyber-physischen Systems basiert darauf, dass das physische System bzw. seine Einheiten (z.B. Stromleitungen, Transformatorstationen, Umspannwerke, Wasserleitungen, Raumeinheiten, Heizungs- und/oder Kühleinheiten, Schienen, Förderbänder, etc.) über zugeordnete Feldeinheiten bzw. Feldgeräte - meist Sensor- bzw. Messeinheiten und Steuer- und/oder Regeleinheiten sowie Aktoren - mit dem Kommunikationsnetz verbunden ist. Dabei werden von Feldeinheiten (wie z.B. Sensor- und/oder Messeinheiten) Messdaten aus der physischen Welt geliefert und über das Kommunikationsnetz z.B. für eine Verarbeitung weitergeleitet. Nach einer Verarbeitung der Messdaten können daraus z.B. Steuer- und/oder Regeldaten abgeleitet werden, welche über das Kommunikationsnetz an Feldeinheiten (z.B. Steuereinheiten, Regeleinheiten oder Aktoren) weitergegeben werden, von welchen das physische System beeinflusst wird. Auf den Feldeinheiten können dazu entsprechende Funktionsmodule - d.h. Anwendungen bzw. Applikationen - hinterlegt/angebracht sein und ablaufen, durch welche beispielsweise ausführbare Funktionalitäten (z.B. Sensor, Messeinheit, Datenverarbeitung, Steuerung, Regelung, etc.) für die jeweilige Feldeinheit festgelegt werden. Ein Funktionsmodul kann beispielsweise als Software-Einheit, als Software-/Hardware-Einheit oder gegebenenfalls als reine Hardware-Einheit ausgestaltet sein - in Abhängigkeit der jeweils zu realisierenden Funktionalität.

In vielen cyber-physischen Systemen gibt es allerdings die Situation, dass es eine Topologie (d.h. ein Aufbau bzw. eine Struktur) des physischen Systems und eine davon unabhängige Kommunikationstopologie des Kommunikationsnetzes (d.h. logische Vernetzung für einen Datenfluss zwischen den Feldeinheiten) und/oder eine davon unabhängige Topologie des physischen Kommunikationsnetzes bzw. der physischen Übertragungswege des Kommunikationsnetzes gibt. Bei einem Energieversorgungsnetz erfolgt beispielsweise ein Energiefluss von Erzeugern zu Verbrauchern über Einheiten des physischen Systems (z.B. Stromleitungen, Transformatoreinheiten, etc.), während Kommunikationsverbindungen für eine Datenübertragung beispielsweise von Zwischenstationen (z.B. Sensor- oder Messeinheiten bei Verbrauchern, Erzeugern oder Transformatoreinheiten) zu einer Zentrale aufgebaut werden. Bei einem Wasserversorgungssystem kann z.B. das physische System im Boden vergrabene Wasserleitungen umfassen und das Kommunikationsnetz von über Funk kommunizierende Feldeinheiten bzw. Feldgeräten (z.B. zur Überwachung und/oder Steuerung der Wasserleitungen) aufgebaut werden.

Damit in einem cyber-physischen System physikalisch benachbarte Stationen oder Einheiten des physischen Systems bzw. die jeweils zugehörigen Feldeinheiten z.B. für eine bestimmte Anwendung (z.B. Steuerungs- und/oder Regelungsvorgänge, etc.) miteinander interagieren können, ist es allerdings notwendig, dass die jeweiligen Einheiten voneinander wissen bzw. auch im Kommunikationsnetz Verbindungen zum Austausch von Daten zwischen diesen Einheiten des physischen Systems bzw. den zugehörigen Feldeinheiten aufbauen können. Das kann beispielsweise mittels manueller Konfiguration erzielt werden, wobei eine Übertragung von Daten (z.B. Mess-, Sensor-, Steuer- und/oder Regeldaten) - d.h. das so genannte Routing - anwendungsspezifisch auf einer Anwendungsebene (z.B. im jeweiligen Funktionsmodul der jeweiligen Feldeinheit) implementiert wird. Die manuelle Konfiguration hat allerdings - neben einem sehr hohen Implementierungsaufwand - den Nachteil, dass ein statisches Abbild des physischen Systems in der Anwendung bzw. dem jeweiligen Funktionsmodul entsteht. Das kann vor allem bei physischen Systemen mit sich dynamisch ändernden Topologien zu großen Aufwänden führen, da alle möglichen Topologien des physischen Systems sowie die entsprechenden Kommunikationstopologien für das Kommunikationsnetz hinterlegt werden müssen, um Probleme beim Datenaustausch zwischen den Feldeinheiten und beim Ausführen der jeweiligen Anwendungen bzw. Funktionsmodulen zu verhindern.

Ein derartiges physisches System mit sich dynamisch ändernder Topologie ist beispielsweise ein Energieversorgungsnetz mit einem Umspannwerk, von welchem in einem zugehörigen Versorgungsgebiet für Einhaltung eines vorgegebenen Spannungsbandes gesorgt wird. Dabei kann z.B. mit Hilfe eines Stufentransformators die Spannung im zugehörigen Versorgungsgebiet angehoben oder gesenkt werden. Eine Datenbasis wird dazu z.B. von den zum Umspannwerk zugehörigen Ortsnetzstationen bzw. den entsprechenden Feldeinheiten der Ortsnetzstationen geliefert. Wird nun z.B. aufgrund einer Umschaltung im Energieversorgungsnetz ein Teil des ursprünglichen Versorgungsgebiets des Umspannwerks von einem anderen Umspannwerk versorgt, so muss eine derartige Topologieänderung in den jeweiligen Anwendungen und in der Konfiguration des zugehörigen Kommunikationsnetzes berücksichtigt werden. Auch andere Versorgungssystem (z.B. Wasserversorgung, etc.) oder Fertigungs- und/oder Produktionsanlagen können beispielsweise physische System mit sich dynamisch ändernder Topologie darstellen.

Bei derartigen physischen Systemen, welche sich dynamisch ändernden Topologien aufweisen, kann es z.B. vorteilhaft sein, Anwendung und Datenaustausch bzw. Routing zu trennen. Dadurch kann von der Anwendung oder vom Funktionsmodul nur die jeweils vorgesehene Funktion (z.B. Daten sammeln, Daten verarbeiten, Steuer- und/oder Regelvorgänge durchführen, etc.) ausgeführt werden. Vom Routing wird dann die entsprechende Verteilung der Daten an die jeweiligen Einheiten des physischen Systems bzw. die zugehörigen Feldeinheiten übernommen. Dadurch ist es z.B. nicht mehr unbedingt notwendig, sämtlich mögliche Topologien des physischen Systems sowie die entsprechenden Topologien für das Kommunikationsnetz zu hinterlegen.

Für eine mögliche Realisierung einer Trennung zwischen Anwendung bzw. Anwendungsebene und Routing bzw. Kommunikationsebene kann beispielsweise der Ansatz des so genannten Software Defined Networks (SDN) herangezogen werden, welcher z.B. aus der Schrift "Halaplidis, E. et al.: "Software-Defined Networking (SDN): Layers and Architecture Terminology" RFC 7426; Internet Research Task Force (IRTF); January 2015." bekannt ist. Durch SDN kann in einer oder mehreren Kommunikationsebenen eine virtuelle Netzwerktopologie für das Kommunikationsnetz aufgebaut werden, welche der jeweiligen Topologie des physischen Systems entspricht, und die Kommunikationstopologie des Kommunikationsnetzes einfach und dynamisch im Betrieb an neue Gegebenheiten angepasst werden. Dadurch können sich die jeweiligen (z.B. benachbarten) Einheiten des physischen Systems bzw. die zugehörigen Feldeinheiten auch im Kommunikationsnetz erkennen. Beim Einsatz von SDN sind für eine sinnvolle und für die jeweilige Anwendung notwendige Interaktion der einzelnen Feldeinheiten neben einem zentralen SDN-Controller keine weiteren zentralen Instanzen notwendig, wobei der zentrale SDN-Controller insbesondere eine Steuerlogik kontrolliert und verwaltet, anhand welcher ein Weiterleitungsverhalten für Daten zwischen den Feldeinheiten geregelt wird. Durch eine Trennung von Anwendung und Routing z.B. mittels SDN wird beispielsweise ein Design von dezentralen Systemen vereinfacht.

Allerdings weisen sowohl eine manuelle Konfiguration als auch eine Verwendung von Ansätzen wie z.B. SDN den Nachteil auf, dass die jeweiligen Anwendungen bzw. Funktionsmodule, welche für die entsprechenden Mess-, Datenverarbeitungs- Steuerungs- und/oder Regelungsvorgänge im cyber-physischen System notwendig sind, auf alle möglichen Feldeinheiten installiert und verfügbar sein müssen. Im oben angeführten Beispiel des Umspannwerks müssen z.B. alle Ortsnetzstationen bzw. die zugehörigen Feldeinheiten die entsprechenden Funktionsmodule (z.B. zur Spannungsüberwachung, für einen Datenaustausch mit dem Umspannwerk, etc.) und eine zugehörige Konfiguration verfügbar haben, auch wenn nur ein kleiner Teil der Ortsnetzstationen mit dem Umspannwerk verbunden ist. Dies kann zu unnötigem Ressourcenverbrauch wie z.B. gebundenen CPU- und/oder Speicherkapazitäten bei den Feldeinheiten durch hinterlegte, aber nicht benötigte Funktionsmodule, zusätzlich geöffneten Kommunikationskanälen und entsprechendem Kommunikationsverkehr, etc. führen. Weiterhin können nicht benötigte Kommunikationskanäle, welche durch nicht benötigte Funktionsmodule auf den Feldeinheiten geöffnet sind, ein Sicherheitsproblem darstellen. Außerdem kann es zu hohen Kosten z.B. durch Lizenzen für die auf den Feldeinheiten installierten Funktionsmodule und/oder zu hohen Kommunikationskosten durch unnötig versendete Nachrichten, etc. kommen.

Die Veröffentlichung EP 3 211 830 A1 zeigt ein Verfahren zum Überwachen und Planen einer Produktionszelle mit Geräten, zwischen denen Daten ausgetauscht werden. Dabei ist eine erste Produktionszelle durch eine Hardware-Konfiguration und eine Software-Konfiguration sowie durch zwischen den Geräten ausgetauschte Daten charakterisierbar. Es werden Information bezüglich der Hard- und Software Konfiguration zu einem bestimmten Zeitpunkt und bezüglich der ausgetauschten Daten zu dem gleichen bestimmten Zeitpunkt als Eigenschaften der ersten Produktionszelle erfasst. Dann wird ein virtuelles, identischen Abbild (zumindest eines Teils der ersten Produktionszelle unter Verwendung der erfassten Information erstellt. Zu verarbeitende Daten werden an das virtuelle Abbild der Produktionszelle zu einem Zeitpunkt nach dem bestimmten Zeitpunkt zugeführt und durch das virtuelle Abbild der ersten Produktionszelle verarbeitet. Die Funktionsweise des virtuellen Abbilds der Produktionszelle wird analysiert und Ergebnisse für die erste oder eine weitere Produktionszelle zur Überwachung oder/und Planung verwendet.

In der Veröffentlichung WO 2005/093530 A2 wird ein Verfahren offenbart, mit welchem die Modifikation einer Maschinenkonfiguration in automatisierten Systemen erleichtert wird. Dies wird durch die dynamische Konfiguration einer modularen Maschine erreicht, deren Module miteinander verbunden und über ein Kommunikationsnetzwerk mit einer Steuereinheit verbunden sind. Während des Betriebs der Maschine wird einer der Kommunikationspartner bestimmt die Kommunikationspartner im Kommunikationsnetz. Dieser generiert dann eine passende Kommunikationskonfiguration und aktiviert diese. Dadurch kann die Kommunikationskonfiguration oder -gestaltung automatisch ausgeführt werden, sogar während des Betriebs der Maschine.

### Darstellung der Erfindung

Der Erfindung liegt daher die Aufgabe zugrunde, ein Verfahren zur Konfigurationsänderung in einem cyber-physischen System anzugeben, durch welches auf einfache Weise eine Konfiguration von Feldeinheiten in einem cyber-physischen System sowie ein für die jeweilige Funktionalität bzw. Anwendung der Feldeinheiten notwendigen Routing bzw. eine Kommunikationstopologie eines Kommunikationsnetzes des cyber-physischen Systems automatisiert an eine jeweils aktuelle Topologie des physischen Systems des cyber-physischen Systems angepasst wird.

Diese Aufgabe wird durch Verfahren zur Konfigurationsänderung in einem cyber-physischen System der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zur Konfigurationsänderung in einem so genannten cyber-physischen System der eingangs erwähnten Art, welches zumindest ein physisches System und ein Kommunikationsnetz umfasst, wobei das Kommunikationsnetz eine von einer Topologie des physischen Systems unabhängige Kommunikationstopologie aufweist. Dabei sind den Einheiten des physischen Systems Feldeinheiten zugeordnet, auf welchen entsprechend der jeweiligen Funktionalität einer jeweiligen Feldeinheit Funktionsmodule hinterlegt sind. Weiterhin wird von den Feldeinheiten entsprechend jeweiligen Funktionalität die Kommunikationstopologie des Kommunikationsnetzes für einen Datenaustausch genutzt. Im Betrieb wird das physische System laufend auf Änderungen seiner Topologie überwacht. Wird eine Änderung der Topologie des physischen Systems festgestellt, so werden aufgrund von Konfigurationsvorgaben die auf der jeweiligen Feldeinheit jeweils hinterlegten Funktionsmodule an die festgestellte Änderung der Topologie des physischen Systems angepasst. Weiterhin wird auf Basis der festgestellten Änderung der Topologie des physischen Systems die Kommunikationstopologie des Kommunikationsnetzes derart rekonfiguriert, dass von den jeweiligen Feldeinheiten entsprechend den aktuell angepassten und auf der jeweiligen Feldeinheit hinterlegten Funktionsmodulen Daten verarbeitet und ausgetauscht werden können.

Der Hauptaspekt der erfindungsgemäß vorgeschlagenen Lösung besteht darin, dass auf einfache Weise die Konfiguration in einem cyber-physischen System automatisch - d.h. ohne manuelle Eingriffe - an eine jeweils aktuelle Topologie des physischen Systems angepasst wird. Insbesondere werden die auf den Feldeinheiten hinterlegten Funktionsmodule sowie eine entsprechende Kommunikationstopologie im Kommunikationsnetz des cyber-physischen Systems an die jeweils aktuelle Topologie des physischen Systems dynamisch angepasst. D.h. die Funktionsmodule sind nur auf jenen Feldeinheiten ablauffähig und ausführbar hinterlegt, auf welchen sie entsprechend der aktuellen Topologie des physischen Systems benötigt werden, und die Daten werden entsprechend der jeweiligen Funktionalitäten der Feldeinheiten über das Kommunikationsnetz ausgetauscht. Dadurch werden Ressourcen wie z.B. Speicherplatz und/oder CPU-Verbrauch reduziert, da die Anzahl der auf den Feldeinheiten laufenden Funktionsmodule bzw. Anwendungen verringert werden kann. Weiterhin werden unnötig geöffnete Kommunikationskanäle vermieden und ein Kommunikationsverkehr sowie Sicherheitsrisken durch (unnötig) geöffnete Kommunikationskanäle reduziert. Zusätzlich werden durch das erfindungsgemäße Verfahren Kosten für z.B. Lizenzen eingespart, da beispielsweise laufenden Anwendungen bzw. Funktionsmodule auf den Feldeinheiten reduziert werden Weiterhin werden auch Kommunikationskosten für z.B. versendete Nachrichten und/oder Kosten für Entwicklungsaufwände reduziert, da beispielsweise die Funktionsmodule vereinfacht werden können.

Bei einer bevorzugten Ausführung des erfindungsgemäßen Verfahrens wird eine zentrale Topologie-Detektionseinheit vorgesehen, von welcher das physische System laufend auf Änderungen der Topologie überwacht wird und von welcher Änderungen der Topologie des physischen Systems festgestellt und weitergeleitet werden. Die zentrale Topologie-Detektionseinheit kann z.B. als domänenspezifische Komponente ausgestaltet sein und rasch und automatisch eine Topologieänderung im physischen System erkennen.

Weiterhin ist es von Vorteil, wenn die festgestellte Änderung der Topologie des physischen Systems an eine Managementeinheit und an eine zentrale Kontrolleinheit des Kommunikationsnetzes weitergeleitet wird. Von der Managementeinheit kann dann auf einfache Weise die Anpassung der auf den jeweiligen Feldeinheiten hinterlegten Funktionsmodule durchgeführt werden. Dazu sind der Managementeinheit die jeweiligen Konfigurationsvorgaben für die jeweiligen Feldeinheiten bekannt. Diese können beispielsweise direkt auf der Managementeinheit oder in einer angebundenen Speichereinheit hinterlegt sein. D.h. die Managementeinheit weiß z.B., bei welcher Topologie des physischen Systems welche Funktionsmodule auf den jeweiligen Feldeinheiten verfügbar/installiert (d.h. das Funktionsmodul ist dort ablauffähig und kann ausgeführt werden) bzw. von den jeweiligen Feldeinheiten entfernt/deinstalliert sein müssen.

Durch die Weiterleitung der jeweils festgestellten Topologieänderung des physischen Systems an die zentrale Kontrolleinheit des Kommunikationsnetzes kann von dieser automatisch und auf einfache Weise eine Rekonfiguration des Kommunikationsnetzes auf Basis der geänderten Topologie des physischen Systems durchgeführt werden. D.h. mit Hilfe der zentralen Kontrolleinheit des Kommunikationsnetzes wird die logische Struktur bzw. die Kommunikationstopologie des Kommunikationsnetzes derart an die geänderte Topologie des physischen Systems angepasst, dass die Daten der auf den Feldeinheiten ablaufenden Funktionsmodule entsprechend anwendungsspezifischer Vorgaben ausgetauscht werden - d.h. von einer jeweiligen Quell-Feldeinheit (z.B. Sensor- oder Messeinheit, etc.) zu einer Senken-Feldeinheit (z.B. Datenverarbeitungseinheit, Regel- oder Steuereinheit, Aktor, etc.), von welcher die Daten benötigt werden, über das Kommunikationsnetz geleitet werden.

Idealerweise werden die Feldeinheiten derart ausgestaltet, dass während eines laufenden Betriebes Funktionsmodule installiert, konfiguriert, aktiviert, deaktiviert und/oder deinstalliert werden können. Für eine derartige Ausgestaltung der Feldeinheiten können z.B. so genannte Industrial Internet-of-Things-Konzepte bzw. IIoT-Konzepte eingesetzt werden, durch welche eine Steigerung der Effektivität und Effizienz erzielt werden kann. Mit derartigen Konzepten kann beispielsweise eine Nutzung von Daten, welche von Feldeinheiten (z.B. Sensoreinheiten, Messeinheiten, Steuer- und Regeleinheiten, etc.) geliefert werden, verbessert werden. Durch ein Installieren, Konfigurieren, Starten, Stoppen und Deinstallieren von Funktionsmodulen auf den jeweiligen Feldeinheiten im laufenden Betrieb sowie durch einen Einsatz von immer leistungsfähigeren Komponenten können die Feldeinheiten zu so genannten Edge Devices ausgebaut werden, von welchen z.B. autonom Analyse-, Steuer- und Regelvorgänge in einem System vorgenommen werden können.

Es ist weiterhin günstig, wenn bei der Anpassung der auf den jeweiligen Feldeinheiten hinterlegten Funktionsmodulen an eine aktuelle Topologie des physischen Systems zwischen zumindest drei Anpassungsmaßnahmen unterschieden wird. Als zumindest erste Anpassungsmaßnahme kann beispielsweise ein Installieren und/oder Deinstallieren von Funktionsmodulen auf der jeweiligen Feldeinheit vorgesehen werden. Dabei wird das jeweilige Funktionsmodul bei der Anpassung an die jeweils geänderte Topologie des physischen Systems auf der jeweiligen Feldeinheit vollständig installiert bzw. deinstalliert. Ein Installieren des jeweiligen Funktionsmodul umfasst dabei z.B. einerseits Aufspielen und/oder Anbringen des Funktionsmoduls auf die jeweilige Feldeinheit (je nachdem ob das Funktionsmodule als Software-Einheit, Software-/Hardware-Einheit oder gegebenenfalls als reine Hardware-Einheit ausgestaltet ist) und dann ein Aktivieren des Funktionsmoduls, damit diese ausgeführt werden kann. Beim vollständigen Deinstallieren des jeweiligen Funktionsmoduls wird dieses zuerst gestoppt bzw. deaktiviert und dann vollständig von der jeweiligen Feldeinheit entfernt.

Ein zumindest zweite Anpassungsmaßnahme kann idealerweise vorsehen, dass bei der Anpassung an die aktuelle Topologie des physischen Systems das jeweilige Funktionsmodul auf der jeweiligen Feldeinheit aktiviert bzw. deaktiviert wird. D.h., das jeweilige Funktionsmodul wurde bereits im Vorfeld - z.B. bei der Installation der jeweiligen Feldeinheit im cyber-physischen System, etc. - vorinstalliert und wird bei der Anpassung an die geänderte Topologie nur mehr gestartet. Beim Deaktivieren wird das jeweilige Funktionsmodul nur gestoppt, aber nicht von der jeweiligen Feldeinheit entfernt, um z.B. bei Bedarf wieder aktiviert bzw. gestartet werden zu können.

Als zumindest dritte Anpassungsmaßnahme kann in vorteilhafter Weise bei der Anpassung an die geänderte Topologie des physischen Systems ein Funktionsmodul auf zumindest einer Feldeinheit oder auf einer Gruppe von Feldeinheiten installiert und gestartet werden, wobei das Funktionsmodul eine Bereitschaftsfunktion aufweist. D.h. das Funktionsmodul fungiert als so genanntes Hot-Standby-Funktionsmodul. Vom Funktionsmodul wird dabei keine Außenwirkung entfaltet, es erhält aber alle verfügbaren Daten, die Ergebnisse, welche vom diesem Funktionsmodul geliefert werden, werden allerdings nicht weiterverarbeitet. Im Bedarfsfall z.B. bei Ausfall eines anderen, gleichartigen Funktionsmoduls kann das Funktionsmodul allerdings dessen Funktionalität übernehmen.

Eine weitere, bevorzugte Ausführungsvariante des erfindungsgemäßen Verfahrens sieht vor, dass weiterhin interne Statusinformationen und/oder Konfigurationsdaten eines Funktionsmoduls mitübertragen werden, wenn dieses Funktionsmodul im Zuge der Anpassung der auf den jeweiligen Feldeinheiten hinterlegten Funktionsmodule von einer ersten Feldeinheit auf eine zweite Feldeinheit übertragen bzw. migriert wird.

Es ist außerdem vorteilhaft, wenn die Kommunikationstopologie des Kommunikationsnetzes mittels eines so genannten Software-Defined-Networks oder SDN festgelegt wird. Da bei der Verwendung von SDN sehr einfach virtuelle Netzwerktopologien für das Kommunikationsnetz des cyber-physischen Systems aufgebaut und adaptiert werden können. Die jeweiligen Feldeinheiten können auf einfache Weise über das Kommunikationsnetz ihre Nachbar-Feldeinheiten erkennen und entsprechend der jeweiligen Anwendungen bzw. Funktionalitäten (z.B. Sensor-, Mess-, Datenverarbeitungs-, Steuer- oder Regeleinheit, Aktoren) miteinander interagieren.

Zusätzlich oder alternativ kann es günstig sein, wenn die Kommunikationstopologie des Kommunikationsnetzes (KN) mittels einer zentralen Datenvermittlungskomponente - eine so genannten Daten-Broker-Komponente - festgelegt wird. Durch den Einsatz einer derartigen zentralen Datenvermittlungs- bzw. Broker-Komponente kann eine höhere Skalierbarkeit und eine dynamischere Netzwerktopologie ermöglicht werden. Es kann beispielsweise ein so genannter Publish-Subscribe-Broker verwendet werden. Bei Verwendung eines so genannten Publish-Subscribe-Brokers werden z.B. Daten und/oder Nachrichten von einer Publish- oder Sender-Komponente über den Broker zu einer Subscribe- oder Empfänger-Komponente verteilt. Dabei kann die Empfänger-Komponente beispielsweise ein Interesse beim Broker registrieren, um Daten und/oder Nachrichten von einer Sender-Komponente in Bezug auf einen bestimmten Nachrichteninhalt zu erhalten. Durch den Broker werden normalerweise Integrität der Senderkomponente sichergestellt und die Verteilung der Daten bzw. Nachrichten verwaltet.

### Kurzbeschreibung der Zeichnung

Die Erfindung wird nachfolgend in beispielhafter Weise anhand der beigefügten Figuren erläutert. Es zeigen:
Figur 1 einen beispielhaften Ablauf des erfindungsgemäßen Verfahrens zur Konfigurationsänderung in einem cyber-physischen System;
Figur 2a und 2b eine beispielhafte Anwendung des erfindungsgemäßen Verfahrens in einem beispielhaften cyber-physischen System vor und nach einer Änderung der Topologie des physischen Systems;

### Ausführung der Erfindung

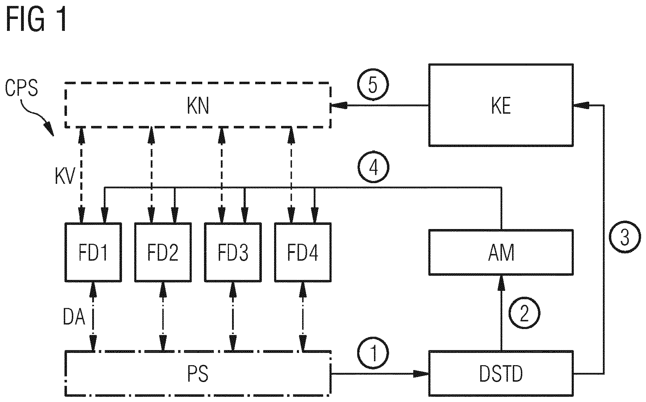

Figur 1 zeigt beispielhaft und schematisch ein cyberphysisches System CPS. Dieses System CPS verknüpft zumindest ein physisches System PS wie z.B. ein Energieversorgungsnetz, ein Wasserversorgungssystem, ein Gebäude oder einen Gebäudekomplex, eine Fertigungs- oder Produktionsanlage, etc. und eine Datenverarbeitungsinfrastruktur bzw. ein Kommunikationsnetz KN, mit dessen Hilfe das physische System PS überwacht, geregelt und gesteuert wird.

Dazu werden Daten DA des physischen Systems PS bzw. seiner Einheiten (z.B. Stromleitungen, Transformatorstationen, Umspannwerke, Wasserleitungen, Raumeinheiten, Heizungs- und/oder Kühleinheiten, Schienen, Förderbänder, etc.) mit Hilfe von zugeordneten Feldeinheiten FD1, FD2, FD3, FD4 wie z.B. Sensor- und/oder Messeinheiten gesammelt und beispielsweise für eine Weiterleitung entsprechend bearbeitet. Von den Feldeinheiten FD1, FD2, FD3, FD4 werden dann auf Basis der entsprechend bearbeiteten Daten DA Informationen KV über das Kommunikationsnetz KN untereinander ausgetauscht, wobei aus den von den Feldeinheiten FD1, FD2, FD3, FD4 gesammelten und bearbeiteten Daten DA z.B. Steuer- und/oder Regeldaten DA abgeleitet werden können, welche dann von den Feldeinheiten FD1, FD2, FD3, FD4 wie z.B. Steuereinheiten, Regeleinheiten, Aktoren, etc. dazu verwendet werden können, um das physische System PS zu beeinflussen. Auf den Feldeinheiten FD1, FD2, FD3, FD4 können dazu entsprechende Funktionsmodule - d.h. Anwendungen bzw. Applikationen - hinterlegt sein und ablaufen, durch welche beispielsweise eine oder mehrere Funktionalitäten (z.B. Sensor, Messeinheit, Datenverarbeitung, Steuerung, Regelung, etc.) der jeweiligen Feldeinheit FD1, FD2, FD3, FD4 festgelegt werden. Funktionsmodule können dabei z.B. als Software-Einheiten, als Software-/Hardware-Einheiten oder gegebenenfalls als Hardware-Einheiten ausgestaltet sein.

Im cyber-physischen System CPS weisen allerdings das physische System PS und das Kommunikationsnetz KN voneinander unabhängig Topologien auf. Die Topologie des physischen Systems PS ist z.B. durch physische Verbindungen zwischen den Einheiten des physischen Systems PS festgelegt, wobei das physische System PS eine sich dynamisch verändernde Topologie aufweisen kann (z.B. Änderung eines Versorgungsgebietes durch ein Umspannwerk in einem Energieversorgungsnetz, wodurch z.B. je nach Topologie unterschiedliche Ortsnetzstationen an das Umspannwerk angebunden sein können, Umkonfiguration einer Fertigungs-/Produktionsanlage, etc.). Die Topologie des Kommunikationsnetzes KN bzw. Kommunikationstopologie wird üblicherweise sowohl durch eine physische Vernetzung (z.B. kabelgebunden, drahtlos, optisch, etc.) als auch durch eine logisches Vernetzung (z.B. Routing in einem Ethernet basierten Netzwerk, etc.) für einen Datenaustausch zwischen den Einheiten des physischen Systems PS bzw. den zugehörigen Feldeinheiten FD1, FD2, FD3, FD4 vorgegeben, zwischen welchen für eine Überwachung, Steuerung und/oder Regelung Daten DA und Informationen KV ausgetauscht werden sollen. Dabei kann die logische Kommunikationstopologie des Kommunikationsnetzes KN beispielsweise mittels eines so genannten Software-Defined-Networks- bzw. SDN-Konzeptes festlegt werden.

Zum Erkennen von Änderungen der Topologie des physischen Systems PS wird das physische System PS in einem Überwachungsschritt 1 laufend überwacht. Dazu kann eine zentrale Topologie-Detektionseinheit DSTD vorgesehen werden, von welcher Änderungen der Topologie im physischen System PS festgestellt werden können. Eine festgestellte Änderung der Topologie des physischen Systems PS kann dann von der zentralen Topologie-Detektionseinheit DSTD in zumindest zwei Weiterleitungsschritten 2, 3 beispielsweise an eine Managementeinheit AM und an eine zentrale Kontrolleinheit KE des Kommunikationsnetzes KN weitergeleitet werden. Dabei kann z.B. die detektierte Struktur- bzw. Topologieänderung des physischen System PS in einem ersten Weiterleitungsschritt 2 an die Managementeinheit AM und in einem zweiten Weiterleitungsschritt 3 an die zentrale Kontrolleinheit KE des Kommunikationsnetzes KN übermittelt und gemeldet werden.

Dann werden in einem Konfigurationsschritt 4 auf Basis von Konfigurationsvorgaben die Funktionsmodule, welche jeweils auf den jeweiligen Feldeinheiten FD1, FD2, FD3, FD4 hinterlegt sind, entsprechend der festgestellten Topologieänderung des physischen Systems PS angepasst. Diese Anpassung kann beispielsweise von der Managementeinheit AM durchgeführt werden, wobei die entsprechenden Konfigurationsvorgaben für die jeweiligen Feldeinheiten FD1, FD2, FD3, FD4 entweder direkt auf der Managementeinheit AM verfügbar oder auf einer mit der Managementeinheit AM verbundenen Speichereinheit abgelegt sein können.

Die Konfigurationsvorgaben umfassen dabei beispielsweise Informationen darüber, welche Funktionsmodule auf welchen Feldeinheiten FD1, FD2, FD3, FD4 für die jeweils geänderte Topologie des physischen Systems PS verfügbar und ausführbar sein müssen und welche Funktionsmodule auf welchen Feldeinheiten FD1, FD2, FD3, FD4 für die jeweils geänderte Topologie des physischen Systems PS nicht (mehr) benötigt werden. Dazu können die Feldeinheiten FD1, FD2, FD3, FD4 beispielweise mit Hilfe von IIoT-Konzepten derart ausgestaltet sein, dass während eines laufenden Betriebs des cyber-physischen Systems CPS Funktionsmodule z.B. von der Managementeinheit AM auf den Feldeinheiten FD1, FD2, FD3, FD4 Funktionsmodule installiert, konfiguriert, aktiviert, deaktiviert und/oder deinstalliert werden können.

Weiterhin kann im Konfigurationsschritt 4 vorgesehen sein, dass bei der Anpassung der auf den jeweiligen Feldeinheiten FD1, FD2, FD3, FD4 hinterlegten Funktionsmodule zwischen zumindest drei Anpassungsmaßnahmen unterschieden werden kann, welche z.B. von der Managementeinheit AM entsprechend der Konfigurationsvorgaben durchgeführt werden können. Dabei können beispielsweise als erste Anpassungsmaßnahme Funktionsmodule auf der jeweiligen Feldeinheit FD1, FD2, FD3, FD4 vollständig installiert (d.h. aufgespielt/angebracht und aktiviert) und/oder deinstalliert (gestoppt und entfernt) werden. Als zweite Anpassungsmaßnahme kann z.B. vorgesehen sein, dass Funktionsmodule, welche bereits auf der jeweiligen Feldeinheit FD1, FD2, FD3, FD4 installiert sind, aktiviert bzw. deaktiviert werden, wobei die Funktionsmodule bei Deaktivierung nicht von der jeweiligen Feldeinheit FD1, FD2, FD3, FD4 entfernt werden. Bei einer dritten Anpassungsmaßnahme kann z.B. ein Funktionsmodul auf einer oder mehreren Feldeinheiten FD1, FD2, FD3, FD4 installiert und aktiviert werden, wobei das Funktionsmodul nur eine Bereitschaftsfunktion bzw. eine so genannte Hot-Standby-Funktion aufweist. Dabei erhält das Funktionsmodul alle verfügbaren Daten und kann im Bedarfsfall (z.B. bei Ausfall, etc.) die Funktionalität eines anderen, gleichartigen Funktionsmoduls übernehmen. Weiterhin ist es möglich, dass bei der Anpassung an die geänderte Topologie des physischen Systems eines oder mehrere Funktionsmodule von einer ersten Feldeinheit FD1, FD2, FD3, FD4 auf eine zweite Feldeinheit FD1, FD2, FD3, FD4 migriert werden, wobei interne Statusinformationen und/oder Konfigurationsdaten des betroffenen/ der betroffenen Funktionsmodule mitübertragen werden.

Weiterhin wird in einem Rekonfigurationsschritt 5 das Kommunikationsnetz KN bzw. seine Kommunikationstopologie auf Basis der detektierten Topologieänderung des physischen Systems bzw. der entsprechenden Information durch die zentrale Topologie-Detektionseinheit DSTD derart adaptiert, dass von den Feldeinheiten FD1, FD2, FD3, FD4 entsprechend der angepassten und auf den jeweiligen Feldeinheiten FD1, FD2, FD3, FD4 hinterlegten Funktionsmodulen Daten DA verarbeitet und Informationen KV ausgetauscht werden können. Das bedeutet, eine logische Struktur des Kommunikationsnetzes KN wird im Rekonfigurationsschritt 5 derart angepasst, dass die Daten DA von einer Quell-Feldeinheit FD1, FD2, FD3, FD4 (z.B. Sensor- und/oder Messeinheit, etc.) bzw. den jeweils dort hinterlegten Funktionsmodulen zu der jeweils benötigten Senken-Feldeinheit FD1, FD2, FD3, FD4 (z.B. Steuer- und/oder Regeleinheit, Aktor, etc.) bzw. den jeweils dort hinterlegten Funktionsmodulen geleitet werden. Eine entsprechende Rekonfiguration der Kommunikationstopologie auf Basis der geänderten Topologie des physischen Systems PS kann beispielsweise von der zentralen Kontrolleinheit KE des Kommunikationsnetzes KN durchgeführt werden.

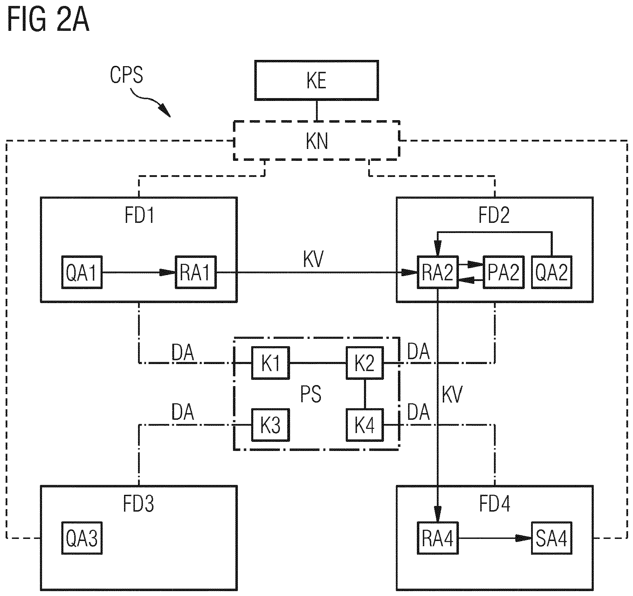

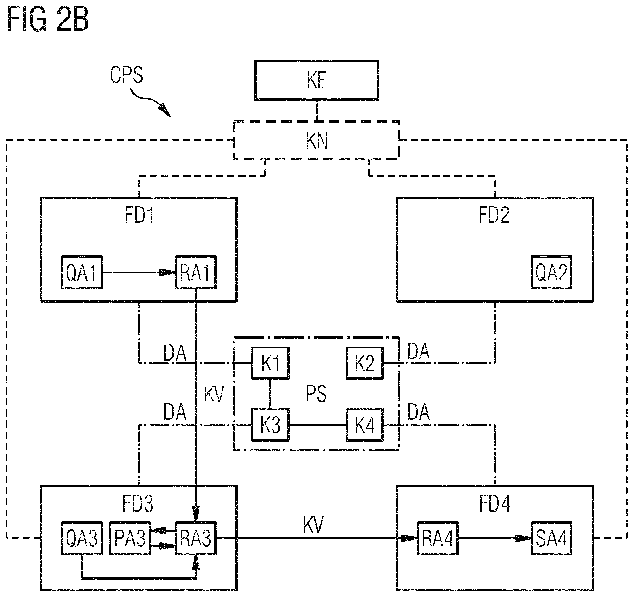

Die Figuren 2a und 2b zeigen wieder beispielhaft und schematisch das cyber-physische System CPS mit zumindest einem physischen System PS und einem damit gekoppelten Kommunikationsnetz KN mit einer zentralen Kontrolleinheit KE. Das physische System PS (z.B. Energieversorgungsnetz) weist vier beispielhaften Einheiten bzw. Knoten K1, K2, K3, K4 wie z.B. Erzeuger, Verbraucher, Wandler, Stufen-Transformator, etc. des Energieversorgungsnetzes auf. Jedem der vier Knoten K1, K2, K3, K4 ist beispielsweise eine Feldeinheit FD1, FD2, FD3, FD4 zugeordnet. So ist z.B. einem ersten Knoten K1 eine erste Feldeinheit FD1, einem zweiten Knoten K2 eine zweite Feldeinheit FD2, einem dritten Knoten K3 eine dritte Feldeinheit FD3 und einem vierten Knoten K4 eine vierte Feldeinheit FD4 zugeordnet. Eine Anzahl der einem Knoten K1, K2, K3, K4 zugeordneten Feldeinheiten FD1, FD2, FD3, FD4 ist nicht auf eine Feldeinheit FD1, FD2, FD3, FD4 eingeschränkt.

In Figur 2a ist eine Ausgangssituation einer Topologie des physischen Systems PS - d.h. eine Situation vor Änderung der Topologie und vor Ablauf des erfindungsgemäßen Verfahrens - beispielhaft dargestellt. Dabei sind beispielsweise ein erster, ein zweiter und ein vierter Knoten K1, K2, K4 des physischen Systems PS miteinander verbunden. Über die jeweils zugeordneten Feldeinheiten FD1, FD2, FD4 werden Informationen KV über das Kommunikationsnetz KN ausgetauscht. Ein dritter Knoten K3 ist mit keinem der anderen Knoten K1, K2, K4 verbunden, kann aber beispielsweise über die zugehörige, dritte Feldeinheit FD3 und das Kommunikationsnetz KN z.B. Daten DA bzw. Informationen KV an andere Einheiten des physischen Systems PS oder ein zentrales System senden.

Für einen Austausch von Informationen KV weisen die Feldeinheiten FD1, FD2, FD3, FD4 entsprechend ihrer jeweiligen Funktionalität und Aufgabe im physischen System PS Funktionsmodule QA1, RA1, QA2, PA2, RA2, QA3, RA4, SA4 auf. In dem in Figur 2a dargestellten beispielhaften cyber-physischen System CPS kommen beispielsweise vier Arten von Funktionsmodulen oder Applikationen QA1, RA1, QA2, PA2, RA2, QA3, RA4, SA4 zum Einsatz. Die Funktionsmodule QA1, RA1, QA2, PA2, RA2, QA3, RA4, SA4 können dabei z.B. in Abhängigkeit der jeweiligen Funktionalitäten als Software-Einheiten, Software-/Hardware-Einheiten und/oder als reine Hardware-Einheiten ausgeführt sein.

Es können beispielsweise so genannte Quell-Funktionsmodule bzw. Quell-Applikationen QA1, QA2, QA3 eingesetzt werden. Von diesen werden Daten DA (z.B. Sensor- oder Messwerte) der Knoten K1, K2, K3 (z.B. Sensor- und/oder Messeinheiten) des physischen Systems PS in Informationen KV zum Austausch über das Kommunikationsnetz KN umgewandelt. Weiterhin kann es so genannte Senken-Funktionsmodule bzw. Senken-Applikationen SA4 geben. Von diesen werden Informationen KV, welche über das Kommunikationsnetz KN bei einer Feldeinheit FD4 (z.B. Steuer- und/oder Regeleinheit, Aktor, etc.) eintreffen, in Daten DA (z.B. Steuer- und/oder Regelsignale) oder physikalische Grö-ßen für das physische System PS gewandelt, um den zugehörigen Knoten K4 entsprechend zu beeinflussen. Weiterhin können auf

Feldeinheiten FD1, FD2, FD4 auch so genannte Prozess-Funktionsmodule PA2 und/oder so genannte Relais-Funktionsmodule RA1, RA2, RA4 hinterlegt sein und ablaufen. Von einem Prozess-Funktionsmodul PA2 bzw. einer Prozess-Applikation PA2 werden Informationen KV im Kommunikationsnetz KN mittels einer Funktion in andere Informationen KV im Kommunikationsnetz KN umgewandelt - d.h. die Informationen KV werden von diesem Funktionsmodule PA2 ver-/bearbeitet. Durch ein so genanntes Relais-Funktionsmodul RA1, RA2, RA4 werden Informationen KV innerhalb des Kommunikationsnetzes KN (entweder innerhalb einer Feldeinheit FD1, FD2, FD4 oder zwischen Feldeinheiten FD1, FD2, FD4) unverändert weitergeleitet.

Bei dem in Figur 2a beispielhaft dargestellten cyber-physischen System CPS sind beispielsweise auf der ersten, zweiten, dritten Feldeinheiten FD1, FD2, FD3 Quell-Funktionsmodule QA1, QA2, QA3 hinterlegt, von welchen Daten DA der zugehörigen Knoten K1, K2, K3 (z.B. Spannungsmesswerte) in entsprechende Informationen KV im Kommunikationsnetz KN umgewandelt werden. Diese Feldeinheiten FD1, FD2, FD3 führen beispielwiese die Funktionalität von Sensor-/Messeinheiten (z.B. für Spannungswerte) aus. Die vierte Feldeinheit FD4, welche dem vierten Knoten K4 (z.B. Stufen-Transformator) zugeordnet ist, weist beispielsweise ein Senken-Funktionsmodul SA4 auf, von welchem aus dem Kommunikationsnetz KN erhaltene Informationen KV in Daten DA zur Steuerung des vierten Knotens K4 umgewandelt werden. Die vierte Feldeinheit FD4 führt damit z.B. die Funktionalität einer Steuer- und/oder Regeleinheit aus.

Da in der in Figur 2a beispielhaft dargestellten Topologie des physischen Systems PS der erste Knoten K1 mit dem zweiten Knoten K2 und der zweite Knoten K2 mit dem vierten Knoten K4 verbunden sind, weisen die jeweils zugehörigen Feldeinheiten FD1, FD2, FD4 auch Relais-Funktionsmodule RA1, RA2, RA4 auf. Dabei werden von den Relais-Funktionsmodulen RA1, RA2 der ersten bzw. der zweiten Feldeinheiten FD1, FD2 die jeweils von den zugehörigen Quell-Funktionsmodulen QA1, QA2 erzeugten Informationen KV weitergeleitet. So werden z.B. die vom Quell-Funktionsmodul QA1 der ersten Feldeinheit FD1 erzeugten Informationen KV über das Kommunikationsnetz KN an die zweiten Feldeinheit FD2 gesendet. Dort werden die Informationen KV vom Relais-Funktionsmodul RA2 der Feldeinheit FD2 empfangen. Die vom Quell-Funktionsmodul QA2 der zweiten Feldeinheit FD2 erzeugten Informationen KV werden beispielsweise über das Kommunikationsnetz KN an das Relais-Funktionsmodul RA4 der vierten Feldeinheit FD4 gesendet. Weiterhin weist die zum zweiten Knoten K2 gehörende, zweite Feldeinheit FD2 auch ein Prozess-Funktionsmodule PA2 auf, von welchen beispielsweise Informationen KV auf der zweiten Feldeinheit FD2 verarbeitet werden (z.B. Mittelwertbildung, um von Messeinheiten wie z.B. Smart-Metern stammende Messdaten zu anonymisieren, etc.), bevor diese z.B. ebenfalls mittels der Relais-Applikation RA2 an die vierten Feldeinheit FD4 gesendet werden.

Das Kommunikationsnetz KN, welches z.B. eine mittels eines SDN-Konzept festgelegte Kommunikationstopologie aufweist, ist dabei so konfiguriert, dass die Informationen KV von der zum ersten Knoten K1 gehörenden, ersten Feldeinheit FD1 bzw. von dem darauf hinterlegten Relais-Funktionsmodul RA1 an die zweiten Feldeinheit FD2 bzw. an das dort hinterlegte Relais-Funktionsmodul RA2 gesendet werden. Weiterhin ist das Kommunikationsnetz KN derart konfiguriert, dass die Informationen KV von der zweiten Feldeinheit FD2 an die dem vierten Knoten K4 zugeordnete, vierte Feldeinheit FD4 bzw. von den jeweiligen Relais-Funktionsmodul RA2 der zweiten Feldeinheit FD2 zum Relais-Funktionsmodul RA4 der vierten Feldeinheit FD4 übertragen werden.

Figur 2b zeigt ebenfalls das bereits in Figur 2a beispielhaft und schematisch dargestellte cyber-physische System CPS. Es wurde allerdings eine Änderung der Topologie des physischen Systems PS vorgenommen. In der geänderten Topologie sind beispielsweise nun der erste Knoten K1 mit dem dritten Knoten K3 und dieser mit dem vierten Knoten K4 des physischen Systems PS verbunden. Durch diese Änderung der Topologie des physischen Systems PS kann es nun beispielsweise notwendig sein, dass die Daten DA des ersten Knoten bzw. die daraus auf der zugeordneten ersten Feldeinheit FD1 mit dem Quell-Funktionsmodul QA1 abgeleiteten Informationen KV mittels dem entsprechenden Relais-Funktionsmodul RA1 über die dem dritten Knoten K3 zugeordnete, dritte Feldeinheit FD3 mit einem entsprechenden Relais-Funktionsmodul RA3 weitergeleitet werden müssen. Weiterhin kann es durch die Topologieänderung z.B. notwendig sein, dass die Informationen KV, welche von der ersten bzw. dritten Feldeinheiten FD1, FD3 aus den Daten DA des ersten bzw. dritten Knoten K1, K3 des physischen Systems PS abgeleitet wurden, mittels eines Prozess-Funktionsmoduls PA3 auf der dritten Feldeinheit FD3 vor der Weiterleitung an die vierte Feldeinheit FD4 vorverarbeitet werden. Derartige Konfigurationsvorgabe für die Feldeinheiten FD1, FD3, FD4 können z.B. in der Managementeinheit AM bzw. in einer mit der Managementeinheit AM verbundenen Speichereinheit für die jeweilige Topologieänderung hinterlegt sein.

Im Überwachungsschritt 1 des erfindungsgemäßen Verfahrens wird nun die in Figur 2b beispielhaft dargestellte Topologieänderung des physischen Systems PS festgestellt. D.h. die Topologie-Detektionseinheit DSTD erkennt, dass nun der erste Knoten K1 mit dem dritten Knoten K3 und der dritte Knoten K3 mit dem vierten Knoten K4 verbunden ist. Dann wird im ersten und zweiten Weiterleitungsschritt 2, 3 die festgestellte Topologieänderung von der Topologie-Detektionseinheit DSTD beispielsweise an die Managementeinheit AM und an die zentrale Kontrolleinheit KE des Kommunikationsnetzes KN weitergeleitet.

Dann wird im Konfigurationsschritt 4 die Konfiguration der - insbesondere von der Topologieänderung betroffenen - zweiten und dritten Feldeinheiten FD2, FD3 an die festgestellte Topologie des physischen Systems PS anhand der Konfigurationsvorgaben angepasst. Das bedeutet, dass beispielsweise auf der dritten Feldeinheit FD3, welche dem dritten Knoten K3 des physischen Systems PS zugeordnet ist, zusätzlich Funktionsmodule wie z.B. ein Prozess-Funktionsmodul PA3 und ein Relais-Funktionsmodul RA3 installiert und/oder aktiviert werden. Falls diese Funktionsmodule PA3, RA3 auf der dritten Feldeinheit FD3 bereits vorinstalliert sind, so werden sie nur aktiviert. Weiterhin werden die in der Ausgangstopologie auf der zweiten Feldeinheit FD2 hinterlegten und ablaufenden Relais- und Prozess-Funktionsmodule RA2, PA2 beispielweise gestoppt, deaktiviert und/oder deinstalliert. Diese Funktionsmodule RA2, PA2 werden in der geänderten Topologie des physischen Systems PS von der zweiten Feldeinheit FD2 nicht mehr benötigt, da der zweite Knoten K2 in der geänderten Topologie keine Verbindungen mit den anderen Knoten K1, K3, K4 aufweist. Auf der ersten bzw. vierten Feldeinheit FD1, FD4 können beispielsweise die Funktionsmodule QA1, RA1, RA4, SA4 beibehalten werden.

Parallel dazu wird im Rekonfigurationsschritt 5 die Kommunikationstopologie des Kommunikationssystems KN von der zentralen Kontrolleinheit KE an die aktuelle, geänderte Topologie des physischen Systems PS automatisch angepasst. D.h., von der zentralen Kontrolleinheit KE das Kommunikationsnetz KN derart umkonfiguriert, dass nun im cyber-physischen System CPS ein Daten- bzw. Informationsaustausch zwischen der erste Feldeinheit FD1 (mit Hilfe des zugehörigen Relais-Funktionsmoduls RA1) und der dritten Feldeinheit FD3 (mit Hilfe des entsprechenden, neu hinterlegten Relais-Funktionsmodul RA3) stattfinden kann.

Weiterhin wird die Kommunikationstopologie so angepasst, dass Informationen KV der ersten und der dritten Feldeinheit FD1, FD3 auf der dritten Feldeinheit FD3 durch das neu hinterlegte Prozess-Funktionsmodul PA3 vorverarbeitet werden können und dass dann die Informationen KV über das Relais-Funktionsmodul RA3 der dritten Feldeinheit FD3 an die vierte Feldeinheit FD4 zum dortigen Relais-Funktionsmodul RA4 über den Kommunikationsnetz KN gelangen, um im Senken-Funktionsmodul SA4 der vierten Feldeinheit FD4 in entsprechenden Daten DA (z.B. Steuer- und/oder Regeldaten, etc.) für den vierten Knoten K4 umgewandelt zu werden. Zusätzlich wird bei der Anpassung der Kommunikationstopologie berücksichtigt, dass von der zweiten Feldeinheit FD2 keine Informationen mehr an die anderen Feldeinheiten FD1, FD4 zu übertragen sind.

Idealerweise wird von den Funktionsmodulen QA1, RA1, QA2, PA2, RA2, QA3, PA3, RA3, RA4, SA4 keinerlei Topologie bezogenen Intelligenz benötigt, wodurch eine Implementation der Topologie-Anpassung vereinfacht sowie eine Verlässlichkeit erhöht wird.

## Patentansprüche

1. Verfahren zur Konfigurationsänderung in einem so genannten cyber-physischen System (CPS), welches zumindest ein physisches System (PS) und ein Kommunikationsnetz (KN) umfasst, wobei das Kommunikationsnetz (KN) eine von einer Topologie des physischen Systems (PS) unabhängige Kommunikationstopologie aufweist, wobei den Einheiten des physischen Systems (PS) Feldeinheiten (FD1, FD2, FD3, FD4) zugeordnet sind, auf welchen entsprechend der jeweiligen Funktionalität einer jeweiligen Feldeinheit Funktionsmodule hinterlegt sind, und von welchen entsprechend jeweiligen Funktionalität die Kommunikationstopologie des Kommunikationsnetzes (KN) für einen Datenaustausch genutzt wird, ***dadurch gekennzeichnet, dass*** während einer laufenden Überwachung des physischen Systems (PS) eine Änderung der Topologie des physischen Systems festgestellt wird (1), dass aufgrund von Konfigurationsvorgaben die auf der jeweiligen Feldeinheit (FD1, FD2, FD3, FD4) jeweils hinterlegten Funktionsmodule an die festgestellte Änderung der Topologie des physischen Systems (PS) angepasst werden (2, 4), und dass auf Basis der festgestellten Änderung der Topologie des physischen Systems (PS) die Kommunikationstopologie des Kommunikationsnetzes (KN) derart rekonfiguriert wird (3, 5), dass von den jeweiligen Feldeinheiten (FD1, FD2, FD3, FD4) entsprechend den aktuell angepassten und auf der jeweiligen Feldeinheit (FD1, FD2, FD3, FD4) hinterlegten Funktionsmodulen Daten verarbeitet und ausgetauscht werden können.

2. Verfahren nach Anspruch 1, ***dadurch gekennzeichnet, dass*** eine zentrale Topologie-Detektionseinheit (DSTD) vorgesehen wird, von welcher das physische System (PS) laufend auf Änderungen der Topologie überwacht wird (1) und von welcher Änderungen der Topologie des physischen Systems (PS) festgestellt und weitergeleitet werden (2, 3).

3. Verfahren nach einem der Ansprüche 1 bis 2, ***dadurch gekennzeichnet, dass*** die festgestellte Änderung der Topologie des physischen Systems (PS) an eine Managementeinheit (AM) und an eine zentrale Kontrolleinheit (KE) des Kommunikationsnetzes weitergeleitet wird (2, 3).

4. Verfahren nach Anspruch 3, ***dadurch gekennzeichnet, dass*** die Anpassung der auf den jeweiligen Feldeinheiten (FD1, FD2, FD3, FD4) hinterlegten Funktionsmodule von der Managementeinheit (AM) durchgeführt wird (4), auf welcher die jeweiligen Konfigurationsvorgaben für die jeweiligen Feldeinheiten (FD1, FD2, FD3, FD4) verfügbar sind.

5. Verfahren nach Anspruch 3 oder 4, ***dadurch gekennzeichnet, dass*** eine Rekonfiguration der Kommunikationstopologie des Kommunikationsnetzes (KN) auf Basis der geänderten Topologie des physischen Systems (PS) durch die zentralen Kontrolleinheit (KN) des Kommunikationsnetzes durchgeführt wird (5).

6. Verfahren nach einem der vorangegangenen Ansprüche, **da*durch gekennzeichnet, dass*** die Feldeinheiten (FD1, FD2, FD3, FD4) derart ausgestaltet werden, dass während eines laufenden Betriebes Funktionsmodule installiert, konfiguriert, aktiviert, deaktiviert und/oder deinstalliert werden können (4).

7. Verfahren nach einem der vorangegangenen Ansprüche, ***dadurch gekennzeichnet, dass*** bei der Anpassung der auf den jeweiligen Feldeinheiten (FD1, FD2, FD3, FD4) hinterlegten Funktionsmodule zwischen zumindest drei Anpassungsmaßnahmen unterschieden wird (4).

8. Verfahren nach Anspruch 7, ***dadurch gekennzeichnet, dass*** bei der Anpassung als zumindest erste Anpassungsmaßnahme ein Installieren und/oder Deinstallieren von Funktionsmodulen auf der jeweiligen Feldeinheit (FD1, FD2, FD3, FD4) vorgesehen wird (4).

9. Verfahren nach Anspruch 7, ***dadurch gekennzeichnet, dass*** bei der Anpassung als zumindest zweite Anpassungsmaßnahme ein Aktivieren und/oder Deaktivieren einer Ausführung von Funktionsmodulen auf der jeweiligen Feldeinheit (FD1, FD2, FD3, FD4) vorgesehen wird (4).

10. Verfahren nach Anspruch 7, ***dadurch gekennzeichnet, dass*** bei der Anpassung als zumindest dritte Anpassungsmaßnahme eine Funktionsmodul auf zumindest einer Feldeinheit (FD1, FD2, FD3, FD4) installiert und gestartet wird (4), wobei das Funktionsmodul eine Bereitschaftsfunktion aufweist.

11. Verfahren nach einem der vorangegangenen Ansprüche, ***dadurch gekennzeichnet, dass*** weiterhin bei der Anpassung der auf den jeweiligen Feldeinheiten (FD1, FD2, FD3, FD4) hinterlegten Funktionsmodule ein Funktionsmodul von einer ersten Feldeinheit (FD1, FD2, FD3, FD4) auf eine zweite Feldeinheit (FD1, FD2, FD3, FD4) übertragen wird (4), wobei interne Statusinformationen und/oder Konfigurationsdaten des Funktionsmoduls mitübertragen werden.

12. Verfahren nach einem der vorangegangenen Ansprüche, ***dadurch gekennzeichnet, dass*** die Kommunikationstopologie des Kommunikationsnetzes (KN) mittels eines so genannten Software-Defined-Networks oder SDN festgelegt wird.

13. Verfahren nach einem der vorangegangenen Ansprüche, ***dadurch gekennzeichnet, dass*** die Kommunikationstopologie des Kommunikationsnetzes (KN) mittels einer zentralen Datenvermittlungskomponente festgelegt wird.

## Claims

1. Method for changing the configuration in what is known as a cyber-physical system (CPS), which comprises at least one physical system (PS) and a communication network (KN), wherein the communication network (KN) has a communication topology that is independent of a topology of the physical system (PS), wherein the units of the physical system (PS) are assigned field units (FD1, FD2, FD3, FD4), on which function modules are stored according to the respective functionality of a respective field unit, and by which the communication topology of the communication network (KN) is used for data exchange according to the respective functionality, ***characterised in that,*** during ongoing monitoring of the physical system (PS), a change in the topology of the physical system (PS) is established (1), the function modules stored on the respective field unit (FD1, FD2, FD3, FD4) in each case are adapted (2, 4) to the established change in the topology of the physical system (PS) on the basis of configuration specifications, and on the basis of the established change in the topology of the physical system (PS) the communication topology of the communication network (KN) is reconfigured (3, 5) in such a manner that data can be processed and exchanged by the respective field units (FD1, FD2, FD3, FD4) according to the function modules that are currently adapted and stored on the respective field unit (FD1, FD2, FD3, FD4).

2. Method according to claim 1, ***characterised in that*** a central topology detection unit (DSTD) is provided, by which the physical system (PS) is monitored (1) on an ongoing basis for changes in the topology, and by which changes in the topology of the physical system (PS) are established and forwarded (2, 3).

3. Method according to one of claims 1 to 2, ***characterised in that*** the established change in the topology of the physical system (PS) is forwarded (2, 3) to a management unit (AM) and to a central control unit (KE) of the communication network.

4. Method according to claim 3, ***characterised in that*** the adaptation of the function modules stored on the respective field units (FD1, FD2, FD3, FD4) is performed (4) by the management unit (AM), on which the respective configuration specifications for the respective field units (FD1, FD2, FD3, FD4) are available.

5. Method according to claim 3 or 4, ***characterised in that*** a reconfiguration of the communication topology of the communication network (KN) on the basis of the changed topology of the physical system (PS) is performed (5) by the central control unit (KN) of the communication network.

6. Method according to one of the preceding claims, ***characterised in that*** the field units (FD1, FD2, FD3, FD4) are embodied in such a manner that function modules can be installed, configured, activated, deactivated and/or uninstalled (4) during ongoing operation.

7. Method according to one of the preceding claims, ***characterised in that,*** during the adaptation of the function modules stored on the respective field units (FD1, FD2, FD3, FD4), a distinction is made (4) between at least three adaptation measures.

8. Method according to claim 7, ***characterised in that,*** during the adaptation, an installation and/or uninstallation of function modules on the respective field unit (FD1, FD2, FD3, FD4) is provided (4) as at least the first adaptation measure.

9. Method according to claim 7, ***characterised in that,*** during the adaptation, an activation and/or deactivation of an execution of function modules on the respective field unit (FD1, FD2, FD3, FD4) is provided (4) as the at least second adaptation measure.

10. Method according to claim 7, ***characterised in that,*** during the adaptation, a function module is installed and started (4) on at least one field unit (FD1, FD2, FD3, FD4) as the at least third adaptation measure, wherein the function module has a readiness function.

11. Method according to one of the preceding claims, ***characterised in that*** furthermore, during the adaptation of the function modules stored on the respective field units (FD1, FD2, FD3, FD4), a function module is transferred (4) from a first field unit (FD1, FD2, FD3, FD4) to a second field unit (FD1, FD2, FD3, FD4), wherein internal status information and/or configuration data of the function module is also transferred.

12. Method according to one of the preceding claims, ***characterised in that*** the communication topology of the communication network (KN) is established by means of what are known as software-defined networks or SDN.

13. Method according to one of the preceding claims, ***characterised in that*** the communication topology of the communication network (KN) is established by means of a central data communication component.

## Revendications

1. Procédé de changement de configuration dans un système dit cyber-physique (CPS), qui comprend au moins un système physique (PS) et un réseau de communication (KN), dans lequel le réseau de communication (KN) présente une topologie de communication indépendante d'une topologie du système physique (PS), dans lequel des unités de terrain (FD1, FD2, FD3, FD4) sont attribuées aux unités du système physique (PS), sur lesquelles des modules fonctionnels sont déposés en fonction de la fonctionnalité respective d'une unité de terrain respective, et par lesquelles la topologie de communication du réseau de communication (KN) est utilisée pour un échange de données en fonction de la fonctionnalité respective, **caractérisé en ce que,** pendant une surveillance continue du système physique (PS), une modification de la topologie du système physique est constatée (1), **en ce que**, sur la base de consignes de configuration, les modules fonctionnels respectivement déposés sur l'unité de terrain respective (FD1, FD2, FD3, FD4) sont adaptés (2, 4) à la modification constatée de la topologie du système physique (PS), et **en ce que**, sur la base de la modification constatée de la topologie du système physique (PS), la topologie de communication du réseau de communication (KN) est reconfigurée (3, 5) de telle sorte que des données peuvent être traitées et échangées par les unités de terrain respectives (FD1, FD2, FD3, FD4) conformément aux modules fonctionnels actuellement adaptés et déposés sur l'unité de terrain respective (FD1, FD2, FD3, FD4) .

2. Procédé selon la revendication 1, **caractérisé en ce qu'**une unité centrale de détection de topologie (DSTD) est prévue, à partir de laquelle le système physique (PS) est surveillé en permanence pour détecter (1) des modifications de la topologie et à partir de laquelle des modifications de la topologie du système physique (PS) sont constatées et transmises (2, 3).

3. Procédé selon l'une des revendications 1 et 2, **caractérisé en ce que** la modification constatée de la topologie du système physique (PS) est transmise à une unité de gestion (AM) et à une unité centrale de contrôle (KE) du réseau de communication (2, 3) .

4. Procédé selon la revendication 3, **caractérisé en ce que** l'adaptation des modules fonctionnels déposés sur les unités de terrain respectives (FD1, FD2, FD3, FD4) est réalisée (4) par l'unité de gestion (AM) sur laquelle sont disponibles les consignes de configuration respectives pour les unités de terrain respectives (FD1, FD2, FD3, FD4).

5. Procédé selon la revendication 3 ou 4, **caractérisé en ce qu'**une reconfiguration de la topologie de communication du réseau de communication (KN) sur la base de la topologie modifiée du système physique (PS) est effectuée (5) par l'unité centrale de contrôle (KN) du réseau de communication.

6. Procédé selon l'une des revendications précédentes, **caractérisé en ce que** les unités de terrain (FD1, FD2, FD3, FD4) sont conçues de manière à ce que des modules fonctionnels puissent être installés, configurés, activés, désactivés et/ou désinstallés (4) pendant le fonctionnement.

7. Procédé selon l'une des revendications précédentes, **caractérisé en ce que** lors de l'adaptation des modules fonctionnels déposés sur les unités de terrain respectives (FD1, FD2, FD3, FD4), une distinction (4) est effectuée entre au moins trois mesures d'adaptation.

8. Procédé selon la revendication 7, **caractérisé en ce que** l'adaptation prévoit (4) comme au moins première mesure d'adaptation une installation et/ou une désinstallation de modules fonctionnels sur l'unité de terrain respective (FD1, FD2, FD3, FD4).

9. Procédé selon la revendication 7, **caractérisé en ce que** lors de l'adaptation, il est prévu (4) comme au moins deuxième mesure d'adaptation une activation et/ou une désactivation d'une exécution de modules fonctionnels sur l'unité de terrain respective (FD1, FD2, FD3, FD4).

10. Procédé selon la revendication 7, **caractérisé en ce que** lors de l'adaptation, un module fonctionnel est installé et démarré (4) sur au moins une unité de terrain (FD1, FD2, FD3, FD4) en tant qu'au moins troisième mesure d'adaptation, dans lequel le module fonctionnel présente une fonction de veille.

11. Procédé selon l'une des revendications précédentes, **caractérisé en ce que,** lors de l'adaptation des modules fonctionnels déposés sur les unités de terrain respectives (FD1, FD2, FD3, FD4), un module fonctionnel est transféré (4) d'une première unité de terrain (FD1, FD2, FD3, FD4) à une deuxième unité de terrain (FD1, FD2, FD3, FD4), dans lequel des informations d'état internes et/ou des données de configuration du module fonctionnel sont également transférées.

12. Procédé selon l'une des revendications précédentes, **caractérisé en ce que** la topologie de communication du réseau de communication (KN) est définie au moyen d'un réseau défini par logiciel ou SDN.

13. Procédé selon l'une des revendications précédentes, **caractérisé en ce que** la topologie de communication du réseau de communication (KN) est définie au moyen d'un composant central de transmission de données.
